# EUROPEAN PATENT SPECIFICATION

(11) **EP 3 477 805 B1**
(45) Date of publication and mention of the grant of the patent: **26.08.2020**
(21) Application number: 18201812.7
(22) Date of filing: 22.10.2018
(51) Int. Cl.: H02G 3/04, F16B 7/04

(54) **CABLE LADDER CORNER**
KABELLEITERECKE
COIN D'ÉCHELLE DE CÂBLE

(30) Priority: 25.10.2017 ES 201731290 U
(43) Date of publication of application: 01.05.2019
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- WO-A1-01/17082
- WO-A1-2015/069127
- WO-A1-2016/046436
- KR-A- 20050 071 317

## Description

### Field of the Invention

The invention is comprised in the field of the cable ladder-type cable trays that are used for guiding electric cables, optical fiber cables, or cables of another type.

The invention particularly relates to cable ladders in which both the side rails and the crosspieces are profiles made of a polymeric material.

More specifically, the invention relates to a cable ladder corner of the type formed by two coplanar side rails attached to one another by a plurality of crosspieces spaced apart from one another, said plurality of crosspieces constituting a discontinuous cable seating surface, wherein each of said crosspieces is a profile made of a polymeric material and each of said side rails is a profile made of a polymeric material, wherein the inner side of each of said side rails, facing the opposite side rail, forms a channel having an open face oriented towards said opposite side rail, and wherein said channels of the side rails and the two ends of each of said crosspieces are shaped such that said ends of the crosspiece are introduced in said channels through said open face and fit and are snap-fitted into said channels.

### State of the Art

WO2016046436A1 discloses rectilinear cable ladders of this type. When a change in direction in the conduction of the cables is desired, two segments of these rectilinear cable ladders can be placed with their ends adjacent or very close to one another, and the cables can be left exposed in the virtual elbow formed by these two cable ladder segments. This is not an aesthetic drawback in most cases, since cable ladders of this type are normally used in technical establishments or in industrial establishments. However, this arrangement has the technical problem that since the ends of the two cable ladder segments are not connected, supports thereof must be provided at the level of said ends. To prevent this problem and at the same time provide a continuous cable ladder in which the cables can be supported on the crosspieces along the entire distance travelled, the solution of connecting the two ends forming the elbow by means of a rectilinear cable ladder intermediate segment, or by means of several successively connected rectilinear cable ladder intermediate segments, forming a polygonal corner, can be adopted. This solution has the drawback that the installation is complicated and expensive, as it requires the use of specific connecting means to establish the angled attachments of the different rectilinear segments, and it also requires making specific oblique cuts at the ends of the rectilinear segments.

In turn, curved metallic cable ladder corners are known, in which the crosspieces and the side rails are metallic profiles attached to one another by enchasing. These known cable ladders are not of the type referred to in the invention, since they are not formed by crosspieces that are profiles made of a polymeric material the ends of which are introduced in a channel of the side rails, which are also profiles made of a polymeric material, such that they fit and are snap-fitted into said channels. KR20050071317A discloses a curved metallic cable ladder corner.

For the purpose of obtaining a curved cable ladder corner of the type referred to in the present invention, it is technically possible to manufacture cable ladder side rails such as those disclosed in said patent document WO2016046436A1, but unlike those disclosed in the latter, they are not rectilinear but rather have a curved segment. In these known cable ladders, in each of the two side rails the open face of the channel is provided with widened portions distributed along the side rail. The widened portions and the open face of the channel are shaped such that a corresponding end of the crosspieces enters said channel through each of said widened portions and is immobilized in said widened portion in the longitudinal direction of the side rail. These widened portions in the open face of the channel allow establishing on the side rails predefined positions for the crosspieces, and on the other hand they prevent said crosspieces from moving along the side rail once they are assembled with said side rail. However, if the side rails are not rectilinear but rather have a curved segment, a difficulty in manufacturing the two side rails such that the widened portions are in exact positions along same arises, such that all the widened portions are facing one another in pairs. On the other hand, the operation of assembling the side rails and crosspieces is more difficult than in the case of rectilinear cable ladders, because this operation is performed either by a user manually or by an automatic machine, and in any case the correct positioning of the side rails one opposite the other is less obvious when they are curved than when they are rectilinear.

### Description of the Invention

The purpose of the invention is to provide a cable ladder corner of the type indicated above, which allows establishing a change in direction in a simpler and less expensive manner and which does not have the aforementioned manufacturing and assembly difficulties.

This is achieved by means of a cable ladder corner of the type indicated above, characterized in that:
- the two side rails have a curved segment with a continuous curvature without angular points;
- at the two ends of said cable ladder corner said two side rails end in one and the same plane perpendicular to said two side rails;
- in one of said side rails the open face of the channel is provided with widened portions distributed along said side rail, said widened portions and said open face being shaped such that a corresponding end of the crosspieces enters said channel through each of said widened portions and is immobilized in said widened portion in the longitudinal direction of said side rail;
- and in the other one of said side rails, the channel is uniform along said side rail, such that a corresponding end of said crosspieces is introduced in said channel through said open face thereof in any position along said side rail.

Preferably, the angle formed by said curved segment is preferably comprised between 90 and 150°.

This configuration according to the invention allows readily installing a continuous cable ladder with a change in direction. To that end, two rectilinear cable ladders forming an angle with one another are attached to one another using a single curved cable ladder corner according to the invention, which is placed like an elbow between the two rectilinear cable ladders and is directly connected to said cable ladders, without needing to make bevel cuts at the ends of the ladder.

Furthermore, since the widened portions are arranged on only one of the side rails, the mentioned manufacturing difficulty is eliminated, while at the same time the assembly of the side rails with the crosspieces by a user or an automatic machine is made considerably easier. The stability of the assembly is not negatively affected, because even though only one end of the crosspieces is immobilized in a widened portion of a side rail, the other end is immobilized by the curvature of the side rail.

Preferably, to make it even easier for a user or an automatic machine to assemble the side rails with the crosspieces, the side rail having the open face of the channel provided with the widened portions is the innermost side rail of the cable ladder corner with respect to the curvature of the curved segment. This furthermore makes it easier to manufacture the cable ladder corner, since the inner side rail, which is the side rail provided with the widened portions, is common for one and the same radius of curvature and one and the same height of the side rail, regardless of the width of the cable ladder corner. In contrast, if the widened portions are made in the outer side rail, the position thereof along the side rail depends on the width of the cable ladder corner.

In preferred embodiments, the two side rails have a rectilinear final segment in the continuation of each of the two ends of the curved segment. This configuration has the advantage that it allows using, for attaching two rectilinear cable ladders by means of the curved cable ladder corner, the same fixing means that are already used for attaching two rectilinear cable ladders.

The invention also comprises other detail-related features shown in the following detailed description of an embodiment of the invention and in the attached drawings.

### Brief Description of the Drawings

The advantages and features of the invention will be better understood based on the following description in which a preferred embodiment of the cable ladder corner according to the invention is described in reference to the drawings in a non-limiting manner with respect to the scope of the main claim.
Figure 1 is a top view of the cable ladder corner.
Figure 2 is a perspective view of the cable ladder corner.
Figure 3 is a perspective view of one of the crosspieces.
Figure 4 is a front perspective view of an end of the inner side rail.
Figure 5 is a front perspective view of an end of the outer side rail.
Figure 6 is a perspective view of the inner side rail from the side intended for receiving the ends of the crosspieces.
Figure 7 is a perspective view of the outer side rail from the side intended for receiving the ends of the crosspieces.
Figure 8 is a perspective view of the cable ladder corner with the crosspieces not fitted in on the side of the inner side rail.
Figure 9 is an enlarged view of an end of Figure 8.
Figure 10 is a detail view of the fitting of an end of a crosspiece with the inner side rail.
Figure 11 is a perspective view of the cable ladder corner with the crosspieces not fitted in on the side of the outer side rail.
Figure 12 is an enlarged view of an end of Figure 11.
Figure 13 is a detail view of the fitting of an end of a crosspiece with the outer side rail.

### Detailed Description of an Embodiment of the Invention

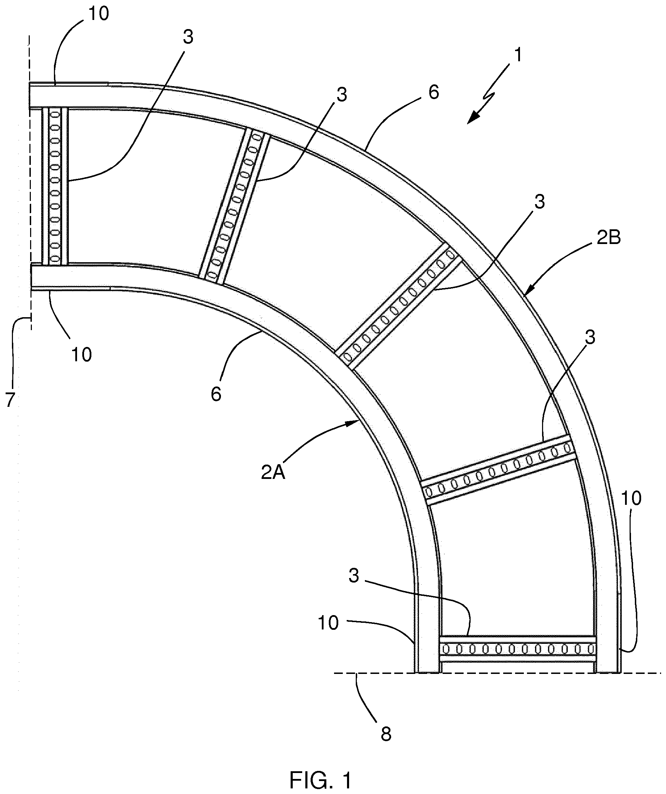

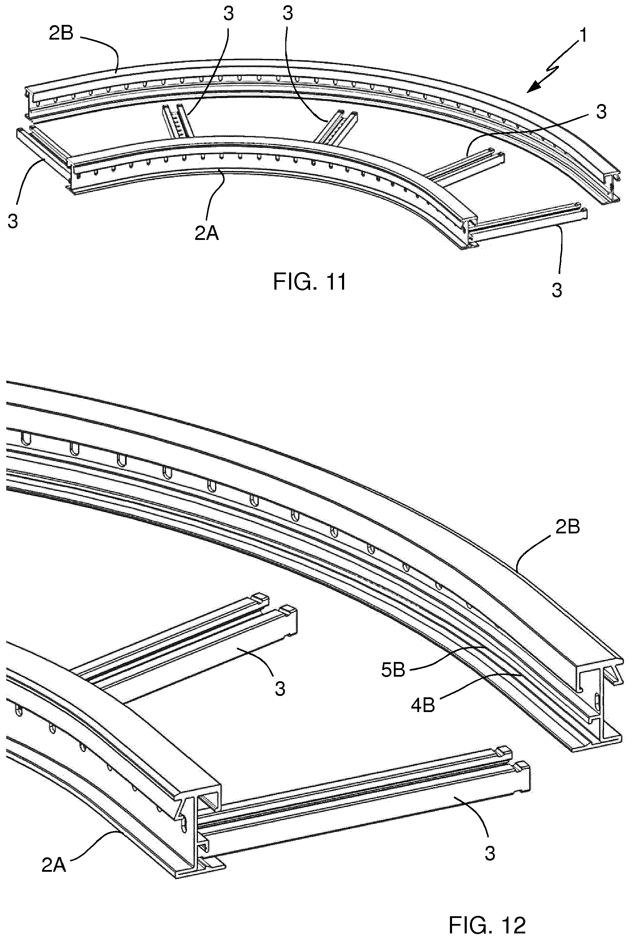

Figures 1 to 13 show an embodiment of a cable ladder corner according to the invention.

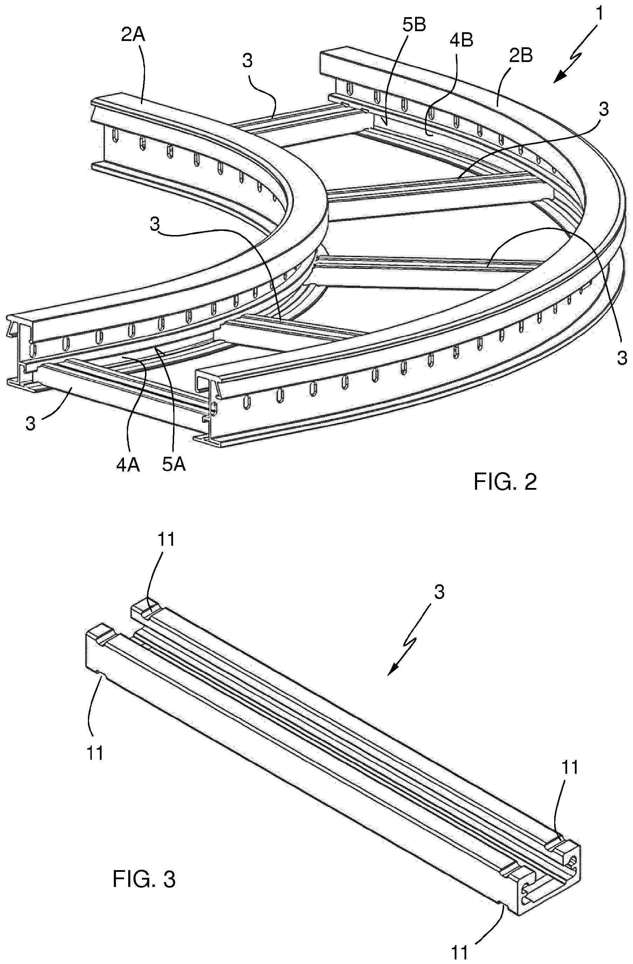

As can be seen in Figures 1 and 2, the cable ladder corner 1 is formed by two coplanar side rails 2A, 2B attached to one another by a plurality of crosspieces 3 spaced apart from one another, constituting a discontinuous cable seating surface. The two side rails 2A, 2B have a curved segment 6 having a continuous curvature without angular points. In the depicted example, the curved segment 6 forms a 90° angle. Each of the two ends of the curved segment 6 is prolonged by a short rectilinear final segment 10. Furthermore, as can be seen in Figure 1, at the two ends of the cable ladder corner 1 the two side rails 2A, 2B end in one and the same plane 7, 8 perpendicular to said two side rails 2A, 2B.

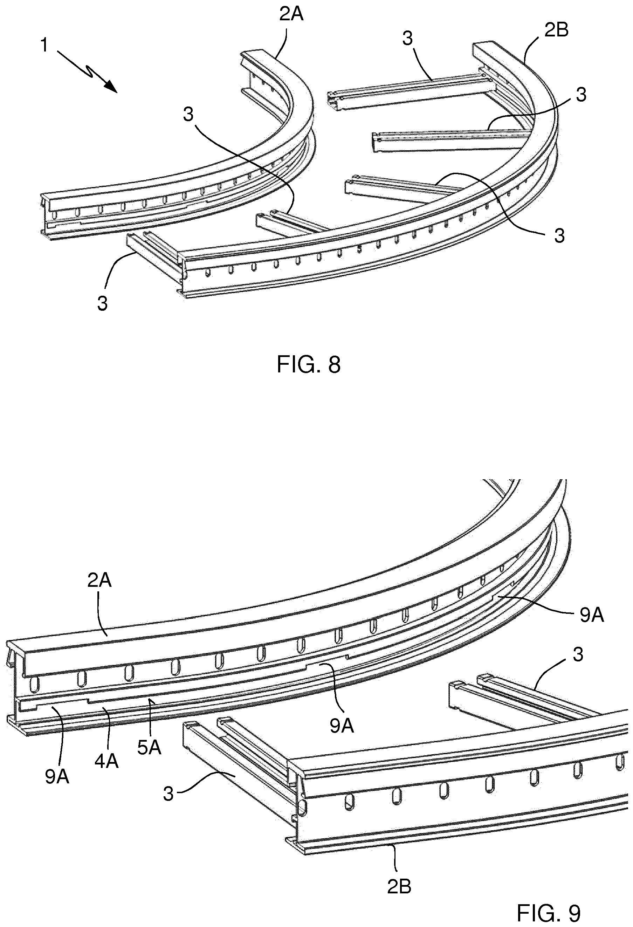

The ends of the crosspieces 3 fit and are snap-fitted into each of the two side rails 2A, 2B, as can be seen in Figures 8 to 13. More precisely, the inner side of each of the side rails 2A, 2B, facing the opposite side rail, forms a channel 4A, 4B having an open face 5A, 5B oriented towards said opposite side rail 2A, 2B. The channels 4A, 4B of the side rails 2A, 2B and the two ends of each of the crosspieces 3 are shaped such that said ends of the crosspiece 3 are introduced in the channels 4A, 4B through open face 5A, 5B thereof and fit and are snap-fitted into said channels 4A, 4B.

Side rail 2A is the inner side rail of the cable ladder corner 1 with respect to the curvature of the curved segment 6. Side rail 2B is the outer side rail.

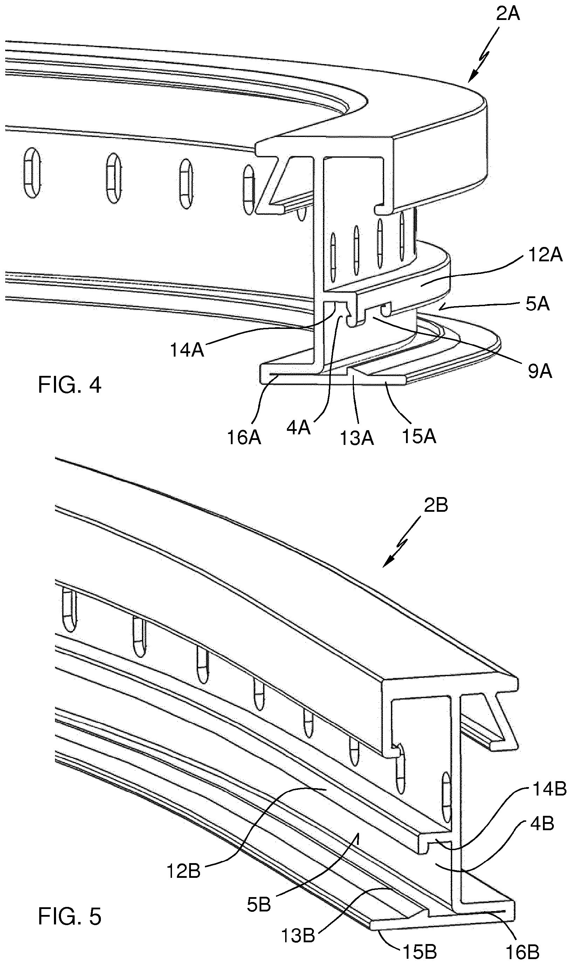

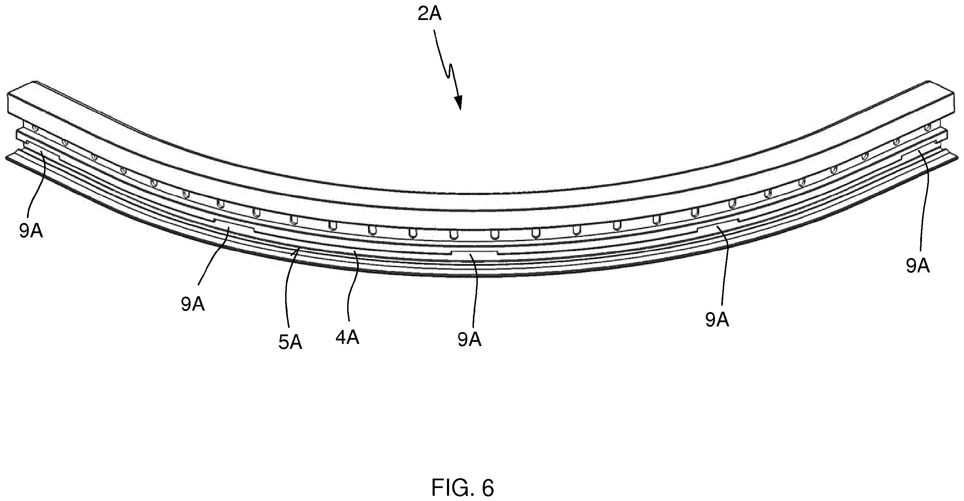

Side rail 2A has the cross-section shape shown in Figure 4. Channel 4A is demarcated by an upper wing 14A and a longer lower wing 15A. The upper wing 14A has at its end a rim 12A oriented towards lower wing 15A. Rim 12A extends along the entire side rail 2A and is provided at intervals along said side rail 2A with rectangular notches forming widened portions 9A in open face 5A of channel 4A, as can be seen in Figure 6. Lower wing 15A has a projection 13A facing rim 12A. The width of open face 5A of channel 4A is thereby demarcated by rim 12A and projection 13A, and is increased at intervals by the widened portions 9A. Lower wing 15A is bent back on itself along a bending line 16A, such that a final segment of said lower wing 15A is a free end segment. This bending line 16A is located in a position protruding in the direction opposite the other side rail 2B, such that the final free end segment of lower wing 15A extends from said bending line 16A towards the other side rail 2B. This configuration allows lower wing 15A to experience elastic bending so as to widen open face 5A of channel 4A, thereby allowing an end of the crosspiece 3 to be pressed into channel 4A through said open face 5A and fit and be snap-fitted into therein.

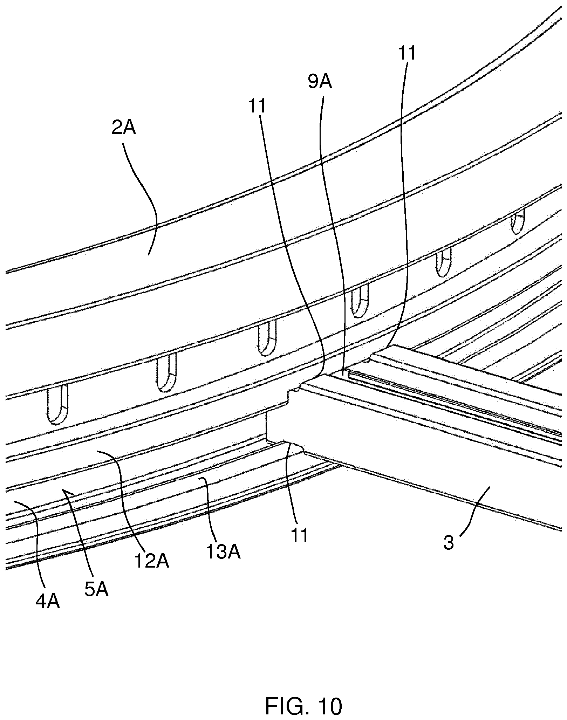

In the depicted example, the crosspieces 3 are all identical to one another and consist of a C-shaped profile, as shown in Figure 3. Recesses 11 in the form of a transverse groove are formed at each end of the crosspiece 3 for coupling said end with the side rails 2A, 2B. The crosspieces 3 are sized such that the end thereof enters channel 4A of side rail 2A through each of the widened portions 9A. To that end, lower wing 15A must be subjected to elastic bending. This occurs when the end of the crosspiece 3 is pushed towards side rail 2A. When the end of the crosspiece 3 has entered open face 5A through the widened portion 9A, it fits and is snap-fitted into therein by means of the coupling of recesses 11 with projection 13A and with the notch of rim 12A forming the widened portion 9A, as can be seen in Figure 10. Furthermore, fitting the end of the crosspiece 3 into the widened portion 9A immobilizes said end in the longitudinal direction of side rail 2A.

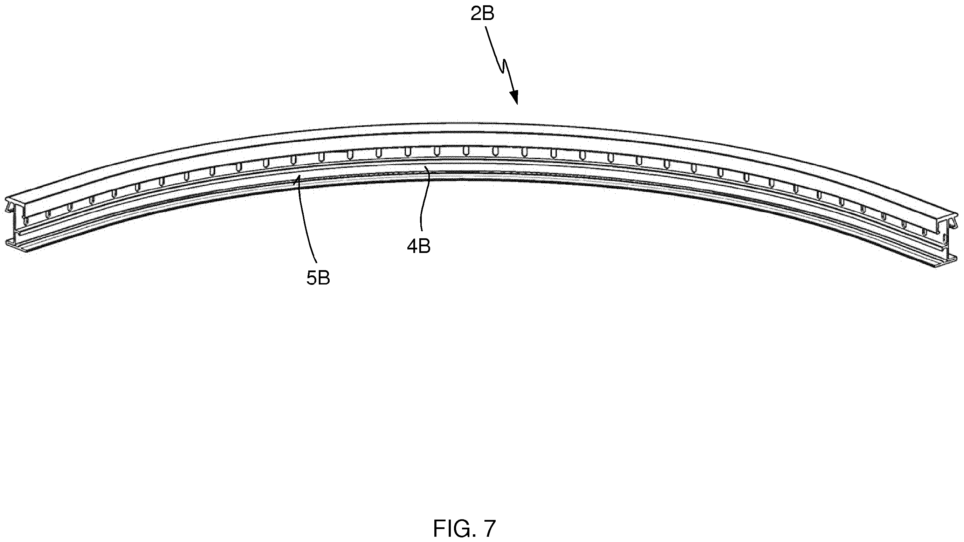

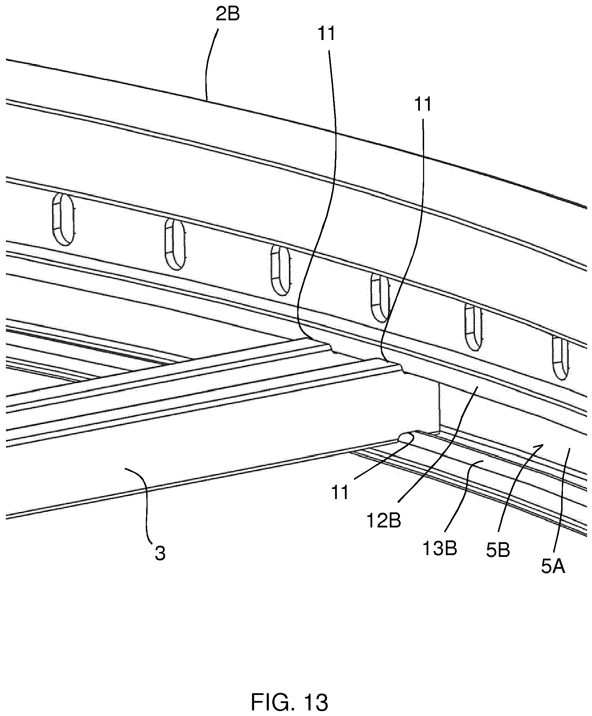

Side rail 2B has the cross-section shape shown in Figure 5. This cross-section shape is the same as the cross-section shape of side rail 2A, with the difference that will be described below. To that end, equivalent elements have been denoted in the drawings with the same reference number as for side rail 2A, but with "B" instead of "A." These equivalent elements are channel 4B, open face 5B, upper wing 14B, lower wing 15B, rim 12B, projection 13B, and bending line 16B. The difference with side rail 2A consists of rim 12B not having notches, so channel 4B, and therefore the width of open face 5B thereof, is uniform along the entire length of side rail 2B, as can be seen in Figure 7. Furthermore, rim 12B has a smaller height than that of rim 12A. Specifically, the height of rim 12B is such that the width of open face 5B in side rail 2B is equal to the width of the widened portions 9A in side rail 2A. As a result, the end of the crosspieces 3 is introduced in channel 4B through open face 5B thereof in any position along side rail 2B. The end of the crosspiece 3 fits and is snap-fitted into channel 4B of side rail 2B in the same way it fits and is snap-fitted into the widened portions 9A of channel 4A of side rail 2A, through elastic bending of lower wing 15B. When the end of the crosspiece 3 has entered through open face 5B, it fits and is snap-fitted by means of the coupling of recesses 11 with projection 13B and with rim 12B, as can be seen in Figure 13. In this case, however, the end of the crosspiece 3 is not immobilized in the longitudinal direction of the side rail by widened portion.

Both the two side rails 2A, 2B and the crosspieces 3 are profiles made of a polymeric material, preferably an electrical insulating material, such as PVC (polyvinyl chloride), for example, with a surface resistivity greater than 100 MΩ (surface resistivity measured according to standard EN 62631-3-2:2016). The polymeric material forming the side rails 2A, 2B can be different from the polymeric material of the crosspieces 3, but it is preferably the same.

The two side rails 2A, 2B are extruded profiles. To make each of these two side rails 2A, 2B, a profile is formed by extrusion of a polymeric material and at the output of the extruder, said profile has a cross-section shape that matches the cross-section shape of side rail 2A, 2B, and said profile is provided with a curvature in order to produce the curved segment 6. In side rail 2A, the notches forming the widened portions 9A are formed by machining. The crosspieces 3 are also extruded profiles formed by extrusion of a polymeric material. The grooves forming the recesses 11 are formed by machining.

## Claims

1. A cable ladder corner (1), formed by two coplanar side rails (2A, 2B) attached to one another by a plurality of crosspieces (3) spaced apart from one another, said plurality of crosspieces (3) constituting a discontinuous cable seating surface, wherein each of said crosspieces (3) is a profile made of a polymeric material and each of said side rails (2A, 2B) is a profile made of a polymeric material, wherein the inner side of each of said side rails (2A, 2B), facing the opposite side rail (2A, 2B), forms a channel (4A, 4B) having an open face (5A, 5B) oriented towards said opposite side rail (2A, 2B), and wherein said channels (4A, 4B) of the side rails (2A, 2B) and the two ends of each of said crosspieces (3) are shaped such that said ends of crosspiece (3) are introduced in said channels (4A, 4B) through said open face (5A, 5B) and fit and are snap-fitted into said channels (4A, 4B), **characterized in that**:
- said two side rails (2A, 2B) have a curved segment (6) with a continuous curvature without angular points;
- at the two ends of said cable ladder corner (1), said two side rails (2A, 2B) end in one and the same plane (7, 8) perpendicular to said two side rails (2A, 2B);
- in one (2A) of said side rails (2A, 2B), said open face (5A) of channel (4A) is provided with widened portions (9A) distributed along said side rail (2A), said widened portions (9A) and said open face (5A) being shaped such that a corresponding end of said crosspieces (3) enters said channel (4A) through each of said widened portions (9A) and is immobilized in said widened portion (9A) in the longitudinal direction of said side rail (2A);
- and in the other one (2B) of said side rails (2A, 2B), said channel (4B) is uniform along said side rail (2B), such that a corresponding end of said crosspieces (3) is introduced in said channel (4B) through said open face (5B) thereof in any position along said side rail (2B).

2. The cable ladder corner (1) according to claim 1, **characterized in that** said curved segment (6) forms an angle comprised between 90° and 150°.

3. The cable ladder corner according to any one of claims 1 or 2, **characterized in that** said side rail (2A) having an open face (5A) of channel (4A) that is provided with said widened portions (9A) is the innermost side rail of said cable ladder corner (1) with respect to the curvature of said curved segment (6).

4. The cable ladder corner according to any one of claims 1 to 3, **characterized in that** said two side rails (2A, 2B) have a rectilinear final segment (10) in the continuation of each of the two ends of said curved segment (6).

## Patentansprüche

1. Kabelleiterecke (1), die aus zwei komplanaren Seitenschienen (2A, 2B) besteht, die über mehrere voneinander beabstandete Querstücke (3) miteinander verbunden sind, wobei die mehreren Querstücke (3) eine diskontinuierliche Kabelsitzfläche bilden, wobei jedes der Querstücke (3) ein aus einem Polymermaterial hergestelltes Profil ist und jede der Seitenschienen (2A, 2B) ein aus einem Polymermaterial hergestelltes Profil ist, wobei die der gegenüberliegenden Seitenschiene (2A, 2B) zugewandte Innenseite jeder der Seitenschienen (2A, 2B) einen Kanal (4A, 4B) bildet, der eine zur gegenüberliegenden Seitenschiene (2A, 2B) hin orientierte offene Fläche (5A, 5B) hat, und wobei die Kanäle (4A, 4B) der Seitenschienen (2A, 2B) und die zwei Enden jedes der Querstücke (3) derart gestaltet sind, dass die Enden des Querstücks (3) durch die offene Fläche (5A, 5B) in die Kanäle (4A, 4B) eingeführt sind und in die Kanäle (4A, 4B) passen und eingeklinkt sind,
**dadurch gekennzeichnet, dass**
- die zwei Seitenschienen (2A, 2B) ein gekrümmtes Segment (6) mit einer kontinuierlichen Krümmung ohne Winkelpunkte haben;
- an den zwei Enden der Kabelleiterecke (1) die zwei Seitenschienen (2A, 2B) in ein und derselben Ebene (7, 8), die senkrecht zu den zwei Seitenschienen (2A, 2B) ist, enden;
- in einer (2A) der Seitenschienen (2A, 2B) die offene Fläche (5A) des Kanals (4A) mit geweiteten Abschnitten (9A) versehen ist, die entlang der Seitenschiene (2A) verteilt sind, wobei die geweiteten Abschnitte (9A) und die offene Fläche (5A) derart gestaltet sind, dass ein entsprechendes Ende der Querstücke (3) durch jeden der geweiteten Abschnitte (9A) in den Kanal (4A) eintritt und in dem geweiteten Abschnitt (9A) in der Längsrichtung der Seitenschiene (2A) immobilisiert ist;
- in der anderen (2B) der Seitenschienen (2A, 2B) der Kanal (4B) entlang der Seitenschiene (2B) gleichförmig ist, so dass ein entsprechendes Ende der Querstücke (3) an irgendeiner Position entlang der Seitenschiene (2B) in den Kanal (4B) durch die offene Fläche (5B) eingeführt ist.

2. Kabelleiterecke (1) nach Anspruch 1, **dadurch gekennzeichnet, dass** das gekrümmte Segment (6) einen Winkel zwischen 90° und 150° bildet.

3. Kabelleiterecke nach einem der Ansprüche 1 oder 2, **dadurch gekennzeichnet, dass** diejenige Seitenschiene (2A), die eine offene Fläche (5A) des Kanals (4A) hat, die mit den geweiteten Abschnitten (9A) versehen ist, bezüglich der Krümmung des gekrümmten Segments (6) die innerste Seitenschiene der Kabelleiterecke (1) ist.

4. Kabelleiterecke nach einem der Ansprüche 1 bis 3, **dadurch gekennzeichnet, dass** die zwei Seitenschienen (2A, 2B) ein geradliniges Endsegment (10) in Fortsetzung jedes der zwei Enden des gekrümmten Segments (6) haben.

## Revendications

1. Coin d'échelle de câble (1), constitué par deux rails latéraux coplanaires (2A, 2B) fixés l'un à l'autre par une pluralité d'entretoises (3) mutuellement espacées les unes des autres, ladite pluralité d'entretoises (3) constituant une surface de logement de câble discontinue, dans lequel chacune desdites entretoises (3) est un profil réalisé en un matériau polymère et chacun des rails latéraux (2A, 2B) est un profil réalisé en un matériau polymère, dans lequel le côté intérieur de chacun desdits rails latéraux (2A, 2B), faisant face au rail latéral opposé (2A, 2B), forme un canal (4A, 4B) comportant une face ouverte (5A, 5B) orientée vers ledit rail latéral opposé (2A, 2B), et dans lequel lesdits canaux (4A, 4B) des rails latéraux (2A, 2B) et les deux extrémités de chacune desdites entretoises (3) sont formés de telle sorte que lesdites extrémités des entretoises (3) soient introduites dans lesdits canaux (4A, 4B) à travers ladite face ouverte (5A, 5B) et s'adaptent, et soient adaptées par encliquetage, dans lesdits canaux (4A, 4B), **caractérisé en ce que** :
- lesdits deux rails latéraux (2A, 2B) comportent un segment incurvé (6) avec une courbure continue sans points angulaires ;
- aux deux extrémités dudit coin d'échelle de câble (1), lesdits deux rails latéraux (2A, 2B) s'achèvent par un seul et même plan (7, 8) perpendiculaire auxdits deux rails latéraux (2A, 2B) ;
- dans l'un (2A) desdits rails latéraux (2A, 2B), ladite face ouverte (5A) du canal (4A) est munie de parties élargies (9A) réparties le long dudit rail latéral (2A), lesdites parties élargies (9A) et ladite face ouverte (5A) étant formées de telle sorte qu'une extrémité correspondante desdites entretoises (3) entre dans ledit canal (4A) par l'intermédiaire de chacune desdites parties élargies (9A) et soit immobilisée dans ladite partie élargie (9A) dans la direction longitudinale dudit rail latéral (2A) ;
- et dans l'autre (2B) desdits rails latéraux (2A, 2B), ledit canal (4B) est uniforme le long dudit rail latéral (2B), de telle sorte qu'une extrémité correspondante desdites entretoises (3) soit introduite dans ledit canal (4B) par l'intermédiaire de ladite face ouverte (5B) de celui-ci dans n'importe quelle position le long dudit rail latéral (2B).

2. Coin d'échelle de câble (1) selon la revendication 1, **caractérisé en ce que** ledit segment incurvé (6) forme un angle compris entre 90° et 150°.

3. Coin d'échelle de câble selon l'une quelconque des revendications 1 ou 2, **caractérisé en ce que** ledit rail latéral (2A) ayant une face ouverte (5A) du canal (4A) qui est munie desdites parties élargies (9A) est le rail latéral situé le plus à l'intérieur dudit coin d'échelle de câble (1) par rapport à la courbure dudit segment incurvé (6).

4. Coin d'échelle de câble selon l'une quelconque des revendications 1 à 3, **caractérisé en ce que** lesdits deux rails latéraux (2A, 2B) comportent un segment final rectiligne (10) dans la continuation de chacune des deux extrémités dudit segment incurvé (6).
